Europäisches Patentamt

European Patent Office

Office européen des brevets

(11) Numéro de publication: **0 286 770 B1**

(12) **FASCICULE DE BREVET EUROPEEN**

(45) Date de publication de fascicule du brevet:
21.11.91

(21) Numéro de dépôt: **87870172.1**

(22) Date de dépôt: **09.12.87**

(51) Int. Cl.⁵: **G11B 17/04**

(54) **Dispositif permettant le centrage automatique de disques de diamètres différents sur le moyen de chargement d'un tourne-disque.**

(30) Priorité: **13.04.87 BE 8700386**

(43) Date de publication de la demande:
**19.10.88 Bulletin 88/42**

(45) Mention de la délivrance du brevet:
**21.11.91 Bulletin 91/47**

(84) Etats contractants désignés:
**BE CH DE FR GB IT LI NL SE**

(56) Documents cités:
**EP-A- 0 185 140      EP-A- 0 200 705**
**FR-A- 2 343 307      GB-A- 2 139 800**
**US-A- 2 508 715      US-A- 4 497 051**
**US-A- 4 498 162      US-A- 4 523 306**

**PATENT ABSTRACTS OF JAPAN, vol. 2, no.**
**99, 17 août 1978, page 5032 E 78; & JP-A-53**
**65 704 (SONY) 12-06-1978**

(73) Titulaire: **STAAR SOCIETE ANONYME**
**Chaussée de Roodebeek, 137-143**
**B-1200 Bruxelles(BE)**

(72) Inventeur: **d'Alayer de Costemore d'Arc, Stéphane Marie André**
**Rue Emile François, 12A**
**B-1474 Ways(BE)**
Inventeur: **Denis, Philippe Victor**
**Rue Reine Astrid, 27**
**B-1473 Genappe(BE)**

(74) Mandataire: **Overath, Philippe et al**
**Cabinet Bede 13, Avenue Antoine Depage**
**B-1050 Bruxelles(BE)**

## Description

Le présent dispositif se rapporte aux appareils lecteurs de disques et plus particulièrement à ceux où la mise en place du disque sur le moyen de mise en rotation est effectué par l'entremise d'un plateau mobile ou "tiroir", comme c'est le cas de nombreux lecteurs de disques du type CD (Compact Discs).

Ce tiroir ménagé dans la face avant de l'appareil permet en position "sortie" de recevoir le disque, puis par translation de transporter le disque à l'intérieur de l'appareil en l'apportant au-dessus de ses moyens de rotation et enfin de le déposer sur le plateau d'entraînement, le disque étant alors dans sa position de reproduction.

La précision du positionnement du disque avant sa descente sur le plateau d'entraînement est assurée par la combinaison de la course bien déterminée du tiroir et de moyens fixes portés par ce tiroir pour recevoir et maintenir le disque dans une position et un plan horizontal donnés.

Ce positionnement s'effectue sans problème aussi longtemps que l'on ne charge des disques que d'un seul et même diamètre. Il en va tout autrement lorsque l'appareil est destiné à recevoir des disques de diamètres différents. En effet, alors qu'apparemment on pourrait utilement prévoir un logement pour disque d'un diamètre plus réduit à l'intérieur de celui prévu pour ceux d'un diamètre supérieur, cette solution qui implique des supports de disques à des hauteurs différentes est difficilement compatible avec les exigences du dispositif de lecture et complique singulièrement le placement et l'enlèvement par l'utilisateur du plus petit disque dans ou de son logement.

D'autre part, dans des réalisations telles que décrites ci-dessus et dont celle objet de la demande de brevet néerlandaise n° 85 00593 est un bon exemple, on a dû, pour éviter des problèmes insurmontables, se contenter de supports ayant une très faible différence de niveau et de ce fait bien des utilisateurs placent mal leurs disques ou encore ceux-ci, sensibles au mouvement d'inertie du tiroir, se voient déplacés de façon incontrôlée par le mouvement du tiroir. Dans les deux cas, on aboutit à voir des disques de petit diamètre mal centrés et de ce fait impossibles à positionner sur le plateau d'entraînement avec pour conséquence soit un non fonctionnement de l'appareil, soit un endommagement du disque si le moteur d'entraînement est activé alors que le disque n'est pas plaqué convenablement sur le plateau d'entraînement.

Des dispositifs mécaniques ont déjà été proposés et notamment par la demanderesse (brevets belges n° 892.952 et n° 895.735) pour automatiquement positionner et centrer des disques de diamètres différents mais de par leur conception, ces dispositifs s'appliquent aux appareils à insertion frontale, c'est-à-dire munis d'une fente au-travers de laquelle le disque passe lorsqu'il est amené de sa position opérative vers sa position inopérative et vice-versa.

On a également déjà proposé, notamment par le brevet US 4.625.304, des dispositifs à friction, c'est-à-dire actifs en permanence pour centrer des disques de diamètres différents et dont le mode de fonctionnement est inversé en fin de course pour libérer la périphérie du disque, après centrage, afin d'en permettre la libre rotation. Outre le fait que de tels dispositifs soient compliqués (inversion du mouvement en fin de course), ils se révèlent peu fiables dans le temps du fait même qu'ils font appel à une friction. En effet, celle-ci s'use à chaque centrage et d'autant plus rapidement que l'on utilise des disques de grand diamètre car ils impliquent un patinage important de la friction.

Le but de la présente invention est de remédier aux inconvénients précités en proposant un dispositif de chargement par tiroir assurant automatiquement le centrage de disques de diamètres différents uniquement lorsque cela est nécessaire.

Un second but de l'invention est de présenter un dispositif ne nécessitant aucune attention de la part de l'usager pour le placement du disque dans le tiroir.

Un troisième but de l'invention est de présenter un dispositif ne nécessitant pas de changements importants ni dans la structure générale des appareils ni dans les habitudes de l'usager.

Un quatrième but de l'invention est de proposer un dispositif excessivement plus simple, fiable et facile à mettre en oeuvre pour une fabrication en grande série.

Un autre but de l'invention est de présenter un dispositif idéalement complémentaire du dispositif de chargement par tiroir faisant l'objet du brevet belge n° 905.639 de la demanderesse.

En vue de la réalisation de ces buts, le dispositif de centrage objet de l'invention comprend un plateau mobile pourvu d'une dépression circulaire assurant le centrage de disques de plus grand diamètre admissible et assurant par son déplacement, le passage du disque d'une position inopérative, dans laquelle le disque peut être déposé et/ou retiré, vers une position opérative où le disque est positionné sur ses moyens d'entraînement et de lecture disposés à l'intérieur du châssis de l'appareil, ce dispositif de centrage comprenant au moins **trois** tétons mobiles montés chacun sur un **support** et destinés à coopérer avec la périphérie des disques par des moyens permettant d'obtenir un mouvement coordonné de l'ensemble des tétons vers le centre du plateau, le dispositif étant caractérisé en ce que le mouvement coordonné de l'ensemble des tétons et des supports est actionné uniquement après un déplacement angulaire prédéterminé d'un seul des supports, indépendamment des autres supports, ce support coopérant lors du déplacement du plateau mobile vers l'intérieur du châssis de l'appareil, avec des moyens de guidage et/ou de maintien permettant ledit déplacement angulaire dans le cas de présence de disques de petit diamètre et l'empêchant dans le cas de présence de disques de grand diamètre. On décrira ci-après trois exécutions de mode de réalisation préféré, la première et la troisième appliquées à un tiroir standard, la seconde à un tiroir muni du dispositif objet du brevet belge n° 905.639 de la demanderesse.

Cette description, non limitative, est faite à l'aide des figures annexées, dans lesquelles :
- la figure 1 est une vue de dessus d'un tiroir selon la première exécution, l'ensemble étant en position de sortie (position inopérative) ;
- la figure 2 est une vue de dessous dudit tiroir selon la figure 1 ;
- la figure 3 est semblable à la figure 2 après dépôt d'un disque de petit diamètre et activation du dispositif de centrage ;
- la figure 4 est semblable à la figure 3, le disque de petit diamètre ayant été centré ;
- la figure 5 est une vue latérale du dispositif représenté à la figure 1 et comprend en plus certains éléments de l'appareil ;
- la figure 6 est semblable à la figure 3, le disque étant cette fois un disque de grand diamètre ;
- la figure 7 est semblable à la figure 4, le disque étant cette fois un disque de grand diamètre ;
- les figures 8 et 9 sont des vues semblables aux figures 1 et 2 et représentent la seconde exécution ;
- la figure 10 est une vue latérale partielle du dispositif selon la second exécution et comprend, comme à la figure 5, certains éléments de l'appareil ;
- la figure 11 est une vue en perspective d'un élément de commande ;
- la figure 12 est une vue de dessous d'un troisième mode de réalisation.

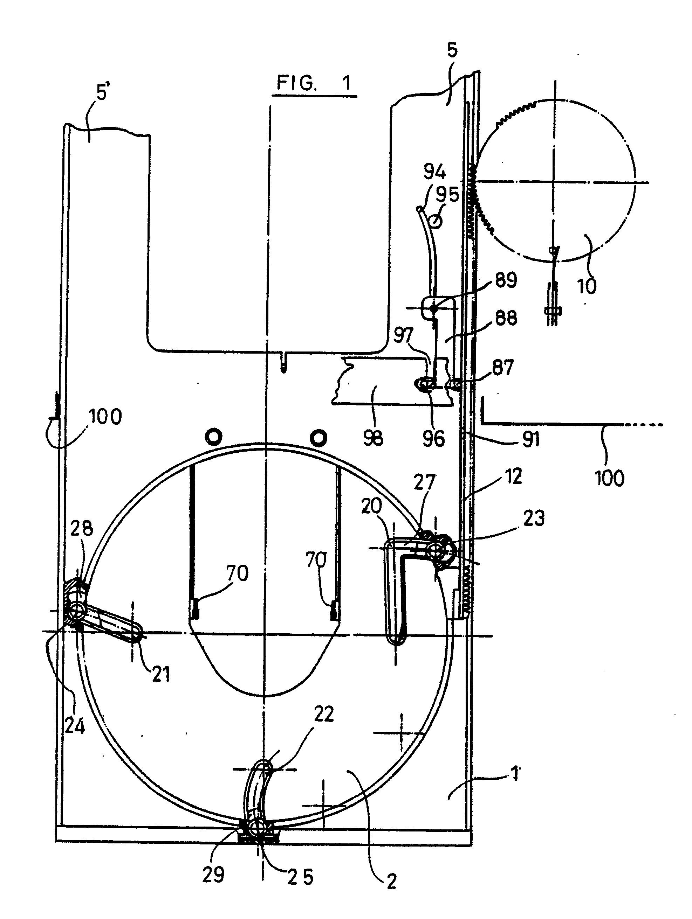

Première exécution (figure 1 à 7 et 11)

Comme représenté à la figure 1, le "tiroir" 1 est constitué d'un volume parallélépipèdique comportant d'une part une dépression circulaire 2 destinée à recevoir un disque 3 qui y est déposé par l'utilisateur et d'autre part, deux longerons 5, 5' destinés à guider et à assurer, par rapport au châssis 100 de l'appareil, le mouvement de translation du tiroir 1 lors de son ouverture et de sa fermeture. La translation du tiroir est assurée par un moteur électrique réversible, non représenté, entraînant un engrenage 10 coopérant avec une crémaillère 12 solidaire de l'un des longerons 5 et donc du tiroir 1.

Au fond de la dépression circulaire 2 dimensionnée de telle sorte à recevoir et à centrer des disques 3 de grand diamètre (dans l'exemple présent diamètre de cinq pouces, soit environ 12,5 cm), sont pratiquées trois fentes 20, 21, 22 de formes appropriées et destinées chacune à permettre et éventuellement à guider le déplacement d'un axe ou téton 23, 24, 25. Ces axes ou tétons sont eux destinés à coopérer avec la périphérie des disques d'un diamètre inférieur à ceux pour lesquels la dépression 2 est conçue de façon à assurer le centrage par rapport à ladite dépression lors du mouvement de translation apportant le disque au-dessus de son plateau d'entraînement en vue de sa mise en position opérative.

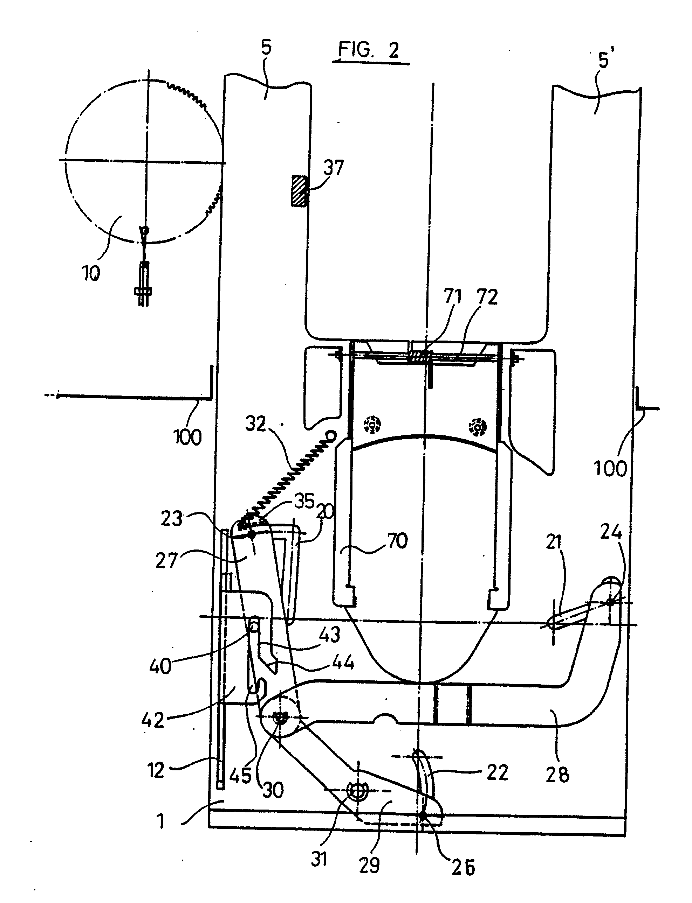

Comme représenté à la figure 2, ces trois tétons sont chacun montés à l'extrémité d'un support 27, 28, 29, ces trois supports voyant leurs mouvements coordonnés du fait de leur liaison à chacune de leur autre extrémité par un axe commun 30.

Ainsi qu'il est représenté à cette même figure, le support 29 est un levier qui pivote autour d'un axe 31 monté au dos de la dépression circulaire 2 et y est maintenu par un anneau brisé.

Un ressort 32 dont les extrémités sont respectivement liées au boîtier du tiroir 1 et à l'extrémité du support 27 portant le téton 23, assure un retour élastique des trois supports dans la position représentée à la figure 2 dès qu'ils en sont écartés.

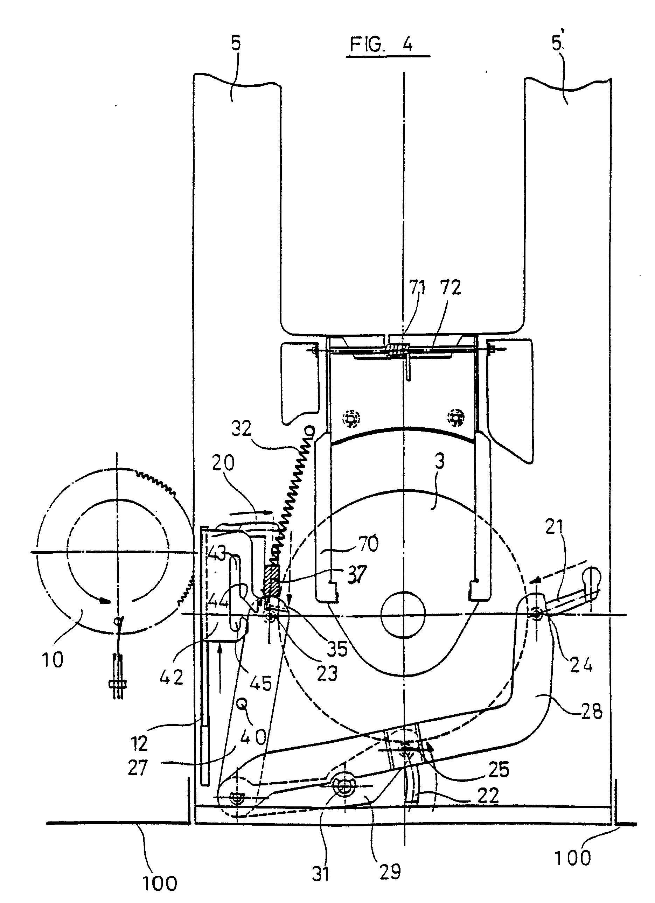

A cette même extrémité du support 27 où sont respectivement fixé le téton 23 et attaché le ressort 32, il est prévu une patte 35 dont le niveau bas est inférieur à celui du tiroir 1 et qui est destinée à coopérer avec le profil 37 fixe, monté sur le châssis 100 de l'appareil de lecture (figures 4, 5 et 7).

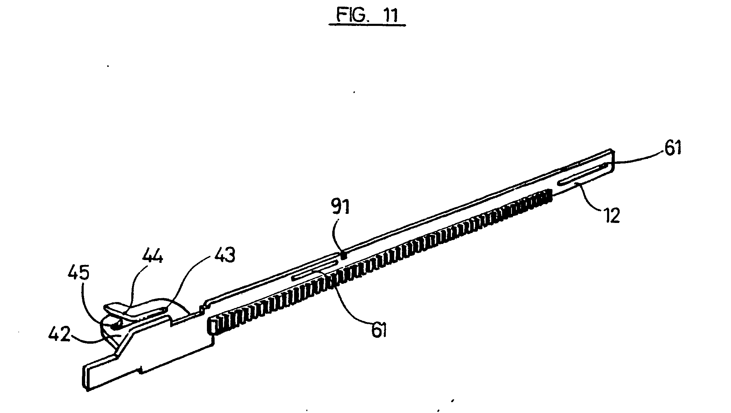

Environ à mi-chemin entre le téton 23 et l'axe 30, le support 27 porte un axe 40 - voir figure 2 - destiné à coopérer avec une came 42 solidairement liée à une crémaillère 12 assurant la translation du tiroir 1 - voir figure 11.

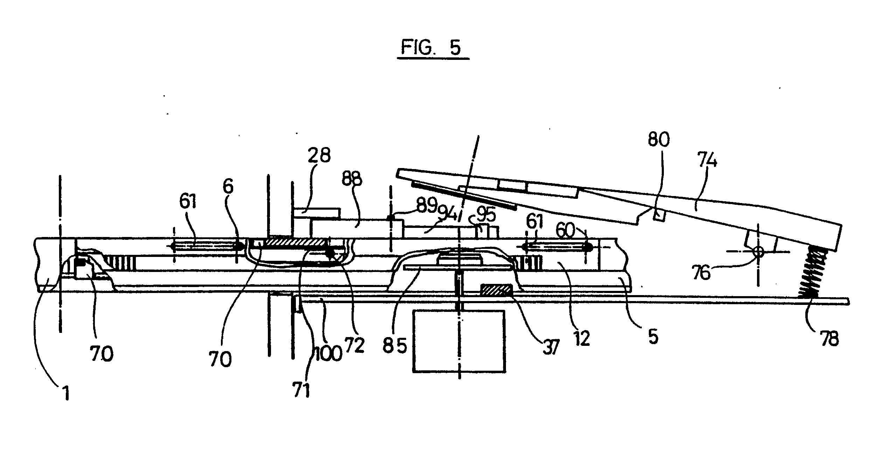

La crémaillère 12 est reliée au longeron 5 du tiroir 1 par l'intermédiaire de tétons 60 et de fentes 61 au travers desquelles passent lesdits tétons (figures 5, 10 et 11) de façon à obtenir :
- un mouvement relatif de la crémaillère par rapport au tiroir,
- un mouvement solidaire de la crémaillère et du tiroir pour la translation de ce dernier.

La commande permettant de solidariser, respectivement désolidariser le mouvement de la crémaillère 12 de celui du tiroir 1 s'effectue de la façon suivante :
- un ergot 87 porté par un levier 88 pivotant autour d'un axe 89 solidaire du tiroir 1 peut s'engager dans une entaille 91 prévue dans la crémaillère 12 et ce sous l'influence d'une patte élastique 94 prenant appui sur une butée 95 solidaire du longeron 5. Le dégagement de l'ergot 87 par rapport à l'entaille 91 est assurée par un tenon 96 porté par le levier 88 et coopérant avec une rampe 97 prévue dans une traverse 98 solidaire du châssis 100 de l'appareil.

Le mouvement de ces supports 27, 28, 29 pour assurer le centrage de disques d'un diamètre inférieur à celui des disques pour lesquels la dépression 2 est conçue, se fait de la manière suivante :

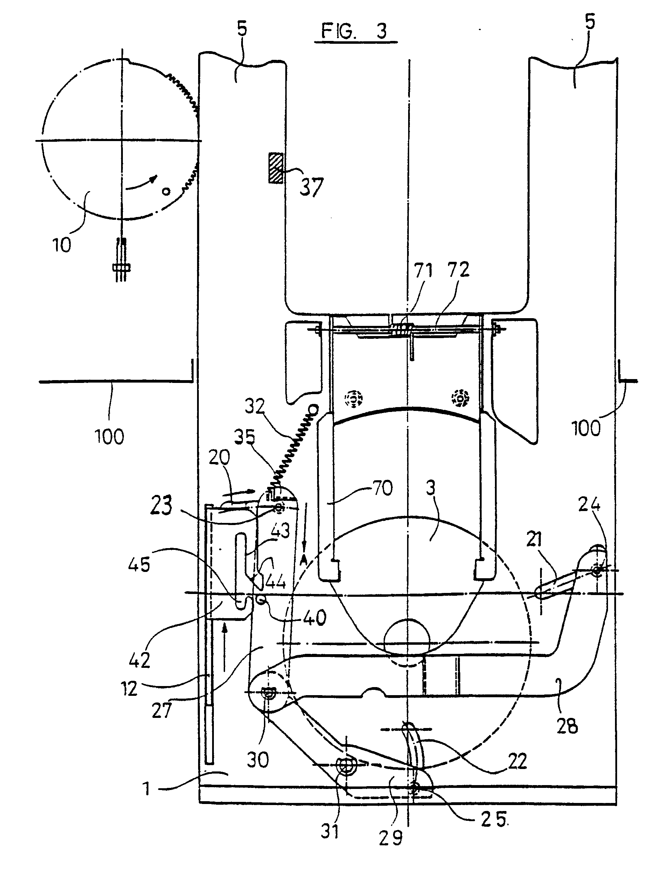

- le disque d'un diamètre de 8 cm environ est déposé au fond de la dépression 2 en n'importe quel endroit ;
- le moteur, non représenté, assurant la rotation de l'engrenage 10 est mis sous tension, soit automatiquement par détection de la présence du disque, soit manuellement par l'utilisateur (actionnement de la touche de chargement ou de lecture) et assure la translation de la crémaillère 12. Grâce à la liaison existant entre ladite crémaillère 12 et le tiroir 1, la crémaillère va dans un premier temps se déplacer sans entraîner le tiroir 1. Au cours de ce déplacement, la came 42 est translatée (figure 3) et l'axe 40 soumis par l'intermédiaire du support 27 à l'influence du ressort 32 s'appuie sur le profil 43 qui en se déplaçant permet un léger pivotement du support 27 et donc du téton 23 vers le centre de la dépression 2.

Puisqu'un disque 3 de petit diamètre a été déposé dans ladite dépression 2 le pivotement du levier 27 n'est limité que par l'extrémité latérale de la fente 20 ce qui permet à l'axe 40 d'échapper à la came 42 (figure 3).

Simultanément, la crémaillère 12 ayant achevé son mouvement relatif (l'ergot 87 étant dans l'entaille 91) par rapport au tiroir 1, ce dernier est alors solidairement translaté avec celle-ci et assure le transfert du disque vers sa position opérative.

Au cours de ce mouvement de translation, la patte 35 coopère avec le profil 37 monté sur le châssis de l'appareil de telle façon à être repoussée vers l'avant de l'appareil (flèche A - figure 3). De ce fait, le support 27 en ne pouvant plus suivre exactement le mouvement de translation du tiroir 1 va, grâce à la liaison assurée par l'axe 30, faire pivoter dans le sens des aiguilles d'une montre le support 29 autour de l'axe 31 et déplacer latéralement le support 28. Par là-même, les trois tétons 23, 24, 25 vont effectuer un déplacement coordonné vers le centre de la dépression 2 et donc assurer le centrage exact d'un disque de petit diamètre par rapport à la dépression 2 prévue pour assurer le centrage d'un disque de grand diamètre (12,5 cm) - figure 4.

Le profil 37 est dimensionné de telle sorte qu'à la fin de la translation du tiroir 1 et donc du mouvement de la mise en position opérative du disque 3 correctement centré, le support 27 puisse subir un léger mouvement de retour sous l'influence du ressort 32 de façon à légèrement dégager les trois tétons 23, 24, 25 de la périphérie du disque 3 pour en permettre la libre rotation en position opérative.

Une autre possibilité est que le support 27 maintient à tout moment les trois tétons 23, 24, 25 dégagés c'est-à-dire à une certaine distance de la périphérie du disque 3 étant donné que le disque est finalement toujours correctement centré sur son moyen d'entraînement par la forme habituellement conique du moyen faisant partie du plateau d'entraînement 85.

Simultanément, les moyens ou supports assurant la descente, respectivement la montée du disque sur ou à partir du plateau d'entraînement sont actionnés. Dans le cas présent, ce mouvement vertical est assuré (figure 5) par la combinaison d'une plaquette 70 supportant le disque 3, soumise à l'influence d'un ressort 71 et pivotant autour d'un axe 72 et d'un bras 74 pivotant autour d'un axe 76 et soumis à l'influence d'un ressort 78.

Le tiroir 1 comprend une rampe, non représentée, permettant le pivotement d'un bras 74 vers le bas et donc, par action de la butée 80 qu'il porte, la descente de la plaquette 70 en fin de course "avant" dudit tiroir, ce qui assure le positionnement du disque 3 sur ses moyens d'entraînement 85, la plaquette 70 étant alors suffisamment dégagée du disque pour en permettre la libre rotation.

Lors de l'éjection d'un disque de petit diamètre, les étapes décrites ci-dessus se déroulement dans l'ordre inverse :

- le disque une fois ôté de son plateau d'entraînement est centré par la présence des trois tétons 23, 24, 25 - voir figure 4 ;
- le profil 37 et le ressort 32 permettent lors de la translation du tiroir 1 le déplacement inverse des supports 27, 28, 29 et donc des tétons 23, 24, 25 qui retournent vers le bord de la dépression 2 - figure 3 ;
- en bout de translation (course arrière) du tiroir 1, la crémaillère effectue son mouvement relatif par rapport audit tiroir 1, la rampe 97 agissant sur le tenon 96 pour faire pivoter le levier 88 et donc dégager l'ergot 87 de l'entaille 91. La came 42, grâce à l'action de ses profils 44 puis 43, ramène l'axe 40 vers le bord extérieur du tiroir, et ce, à l'encontre du ressort 32 de façon à totalement écarter vers l'extérieur les trois tétons pour libérer la dépression 2 et permettre, après enlèvement du disque 3 de petit diamètre, le positionnement d'un disque 3 de grand diamètre (figures 1 et 2).

Lorsqu'un disque 3 de grand diamètre, c'est-à-dire pour lequel est conçue la forme de la dépression, est positionné dans ladite dépression (figure 1) et que le moteur assurant l'entraînement de l'engrenage est mis sous tension afin d'amener ledit disque en position opérative, les supports effectuent le mouvement suivant:

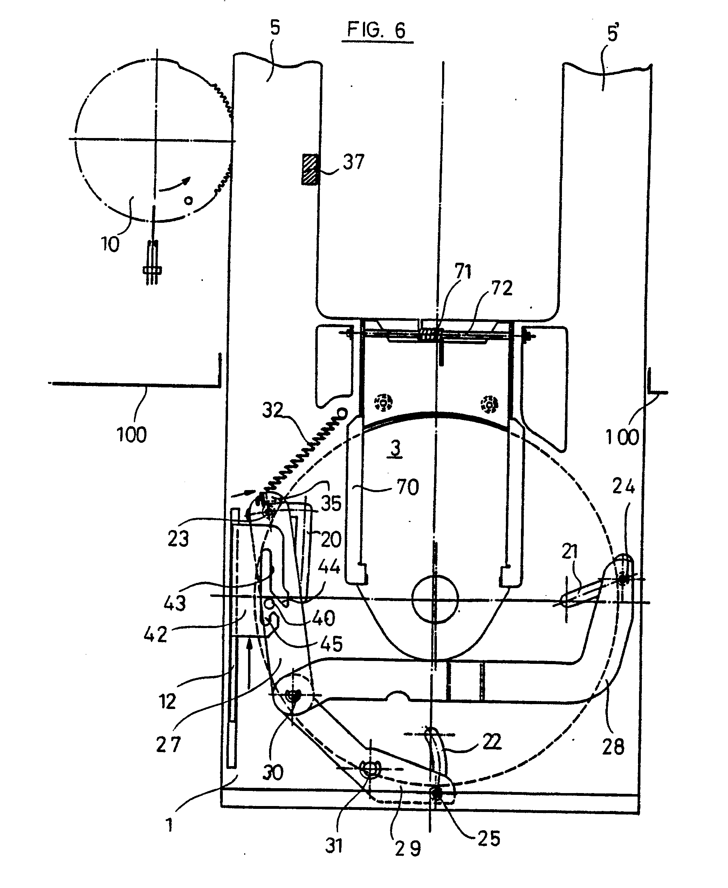

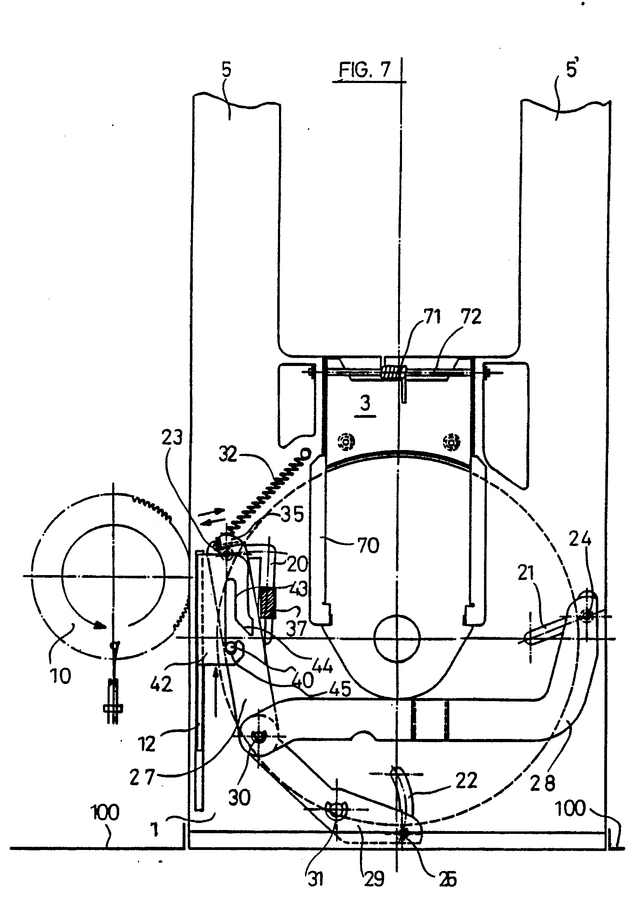

- lors du déplacement relatif de la crémaillère 12 par rapport au tiroir 1, la came 42 est translatée, et comme précédemment l'axe 40, soumis à l'influence du ressort, suit le profil 43 de ladite came. Cependant, le diamètre du disque 3, très légèrement inférieur à celui de la dépression 2, ne permet qu'un faible déplacement (figure 6) vers le centre de la dépression 2 du téton 23 et donc de l'axe 40. Celui-ci, ne pouvant parcourir le profil 44, tombe ensuite (voir figure 7) dans la fourche assurée par le profil 45 qui alors ramène le téton 23 dans sa position initiale en l'écartant de la périphérie du disque 3 afin d'en permettre la libre rotation en position opérative ;
- simultanément, la crémaillère 12 ayant achevé son mouvement relatif par rapport au tiroir 1, ce dernier est alors solidairement translaté avec celle-ci et assure le transfert du disque vers sa position opérative (figure 7).

La fourche 45 en maintenant l'axe 40 dans la position représentée à la figure 7, empêche le profil 37 de coopérer avec la platte 35 et de ce fait les supports 27, 28, 29 et donc les tétons 23, 24, 25 ne subissent aucun déplacement et la libre rotation du disque est assurée.

La descente du disque sur ses moyens d'entraînement est assurée de la même façon que pour le cas d'un disque de plus faible diamètre.

A l'éjection d'un disque 3 de grand diamètre, les mouvements décrits ci-dessus se font dans le sens inverse et pour les mêmes raisons qu'exposées précédemment, l'axe 40 suit le profil 45 puis le profil 43 et ainsi assure le retour des trois tétons 23, 24, 25 en position extrême de sortie (figures 1 et 2), le dispositif étant prêt, après que le disque 3 ait été retiré, à recevoir et centrer un disque de n'importe quel diamètre.

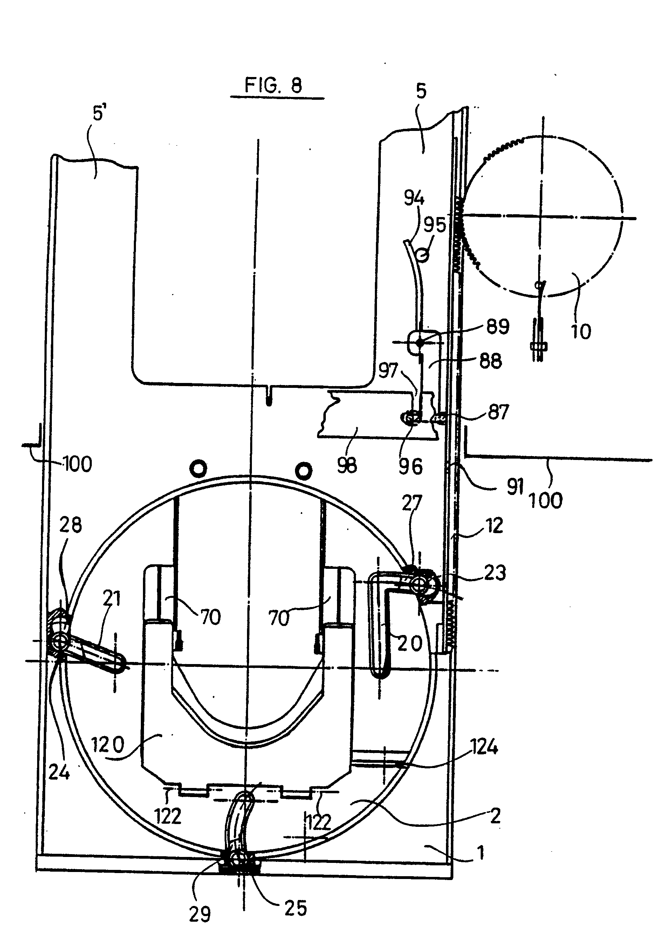

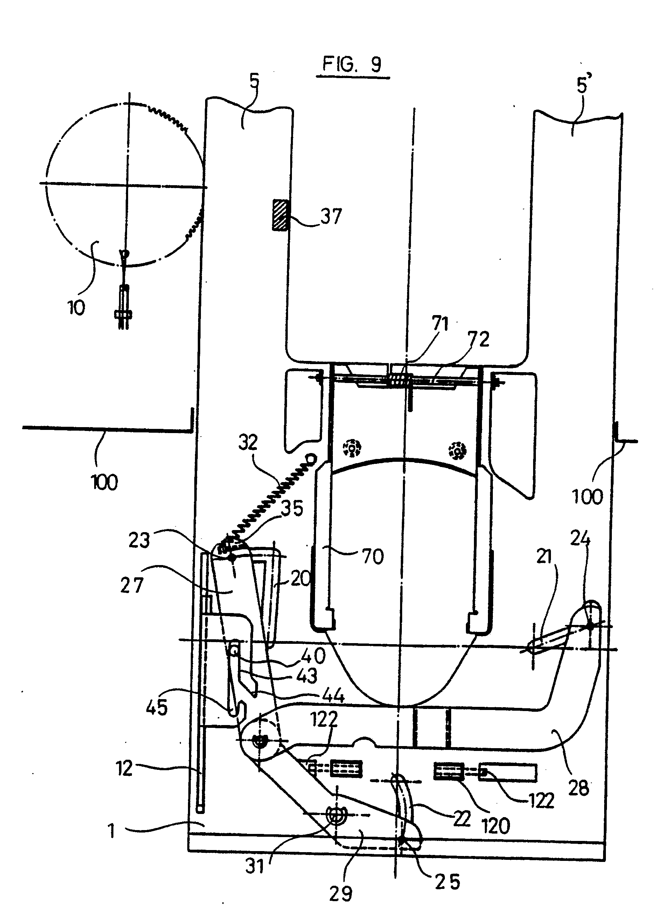

Seconde exécution (figures 8 à 10)

Comme mentionné dans l'introduction, cette exécution assure avantageusement la combinaison du dispositif décrit ci-dessus avec le système de chargement objet du brevet n° 905.639 de la demanderesse auquel on se référera avantageusement pour toute explication relative à son fonctionnement.

Tous les éléments décrits dans le premier mode d'exécution se retrouvent avec les mêmes références dans ce second mode, moyennant les additions suivantes (voir figures 8 à 10) :

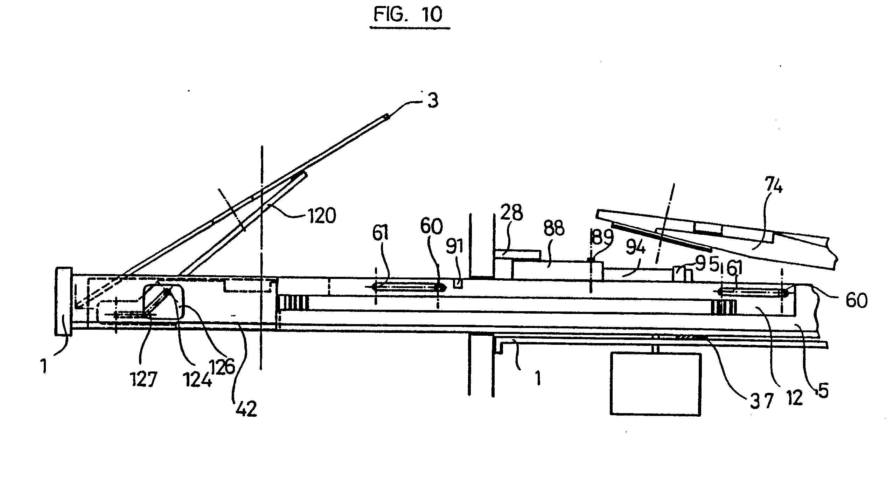

- le fond de la dépression 2 est en partie constitué d'un support 120 pivotant autour d'un axe 122 et possédant latéralement un axe 124 destiné à coopérer avec le profil 127 d'une came 126 solidaire de la crémaillère 12 - voir figure 10.

Lors du mouvement relatif de la crémaillère 12 par rapport au tiroir 1, le profil 127 agit sur l'axe 124 pour assurer le pivotement vers la bas ou vers le haut, et ce, selon le sens de translation de la crémaillère 12, du support 120 assurant ainsi le relèvement ou l'abaissement angulaire du disque 3 comme prévu dans le brevet belge n° 905.639 de la demanderesse.

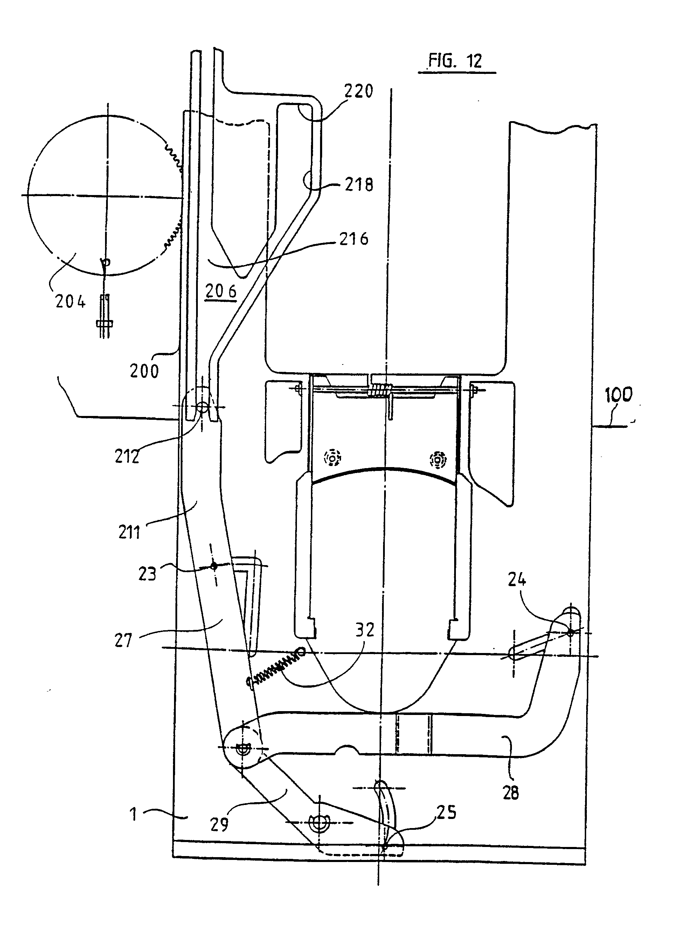

Troisième exécution - figure 12

Dans les exécutions précédentes, la crémaillère et le tiroir sont liés par des moyens leur permettant un mouvement relatif initial pendant lequel a lieu la détection du diamètre du disque. Le tiroir n'est entraîné en mouvement qu'après cette phase.

Selon l'exécution représentée à la figure 12, la crémaillère 200 entraînant le tiroir 1 est ici solidaire dudit tiroir et par conséquent la rotation de l'engrenage 204 assure aussitôt les déplacements du tiroir.

Sur cette figure, à l'exception d'un guide 206, les pièces du châssis situées sous le tiroir n'ont pas été représentées dans un but de simplification.

Comme précédemment, le tiroir 1 comprend trois supports 27, 28 et 29 ayant chacun à l'une de leurs extrémités un téton 23, 24 et 25, coopérant avec la périphérie du disque placé par l'utilisateur.

L'un de ces supports, en l'occurrence le 27, sert également à détecter le diamètre du disque à l'aide d'une prolongation 211 supportant un axe 212 coopérant avec le guide fixe 206. Ce même support 27 est soumis à l'action de moyens élastiques 32 ancrés au tiroir 1.

Le guide 206 a deux canaux 216, 218 destinés à guider l'axe 212 ainsi qu'une butée 220.

Après positionnement d'un disque par l'utilisateur, le tiroir est translaté vers l'intérieur de l'appareil, soit automatiquement soit en réponse à une commande de l'utilisateur, à l'aide d'un moteur (non représenté) entraînant l'engrenage 204. Lorsque l'axe 212 suit le guide 206, les moyens élastiques 32 tendent à faire pivoter le support 27 dans le sens des aiguilles d'une montre et dans le cas où le disque est de petit diamètre, ce pivotement sera tel que l'axe 212 va parcourir le canal 218 pour venir contre la butée 220.

La poursuite du mouvement de translation du tiroir commandera alors le déplacement coordonné des trois supports 27, 28 et 29 et donc des trois tétons 23, 24 et 25 assurant le centrage du disque comme décrit précédemment.

Si maintenant le disque positionné par l'utilisateur est de grand diamètre, le téton 23 en venant contre la périphérie de ce disque n'effectue qu'un très léger pivotement et par conséquent l'axe 212 suivra le canal 216, qui de par son dimensionnement ramène le support 27 en position inopérative et donc le téton 23 à l'écart de la périphérie du disque pour en permettre la libre rotation.

Bien que les différentes exécutions soient décrites pour des disques de deux diamètres différents, on comprend aisément qu'elles peuvent s'appliquer à des disques de diamètres intermédiaires, par exemple quatre pouces (10,16 cm) sans pour autant sortir du cadre de l'invention.

En effet, si un tel disque était positionné dans la dépression 2 et le mouvement de chargement entamé, le téton 23 pourrait pivoter mais d'un angle moindre que s'il s'agissait d'un disque de plus petit diamètre.

Par conséquent, en modifiant les formes de la fente 20 pour tenir compte d'un plus faible pivotement du téton 23, des profils 43, 44 et 45 et de la came 42 et en rajoutant soit un profil fixe 37, soit un canal 218 de longueur appropriée ; le dispositif peut également centrer un disque d'un diamètre intermédiaire.

## Revendications

1. Dispositif de centrage automatique de disques (3) de diamètres différents sur le moyen de chargement (1) d'un appareil lecteur de disques, ce moyen de chargement comprenant un plateau mobile (2) pourvu d'une dépression circulaire assurant le centrage de disques de plus grand diamètre admissible et assurant par son déplacement, le passage du disque d'une position inopérative, dans laquelle le disque peut être déposé et/ou retiré, vers une position opérative où le disque est positionné sur ses moyens d'entraînement et de lecture disposés à l'intérieur du châssis (100) de l'appareil, le dispositif de centrage comprenant au moins trois tétons mobiles (23,24,25) montés chacun sur un support (27,28,29) et destinés à coopérer avec la périphérie des disques (3) par des moyens permettant d'obtenir un mouvement coordonné de l'ensemble des tétons (23,24,25) vers le centre du plateau (2) le dispositif étant caractérisé en ce que le mouvement coordonné de l'ensemble des tétons (23,24,25) et des supports (27,28,29) est actionné uniquement après un déplacement angulaire prédéterminé d'un seul des supports (27), indépendamment des autres supports (28,29), ce support (27) coopérant, lors du déplacement du plateau mobile (2) vers l'intérieur du châssis (100) de l'appareil, avec des moyens de guidage et/ou de maintien (42,206) permettant ledit déplacement angulaire dans le cas de présence de disques de petit diamètre et l'empêchant dans le cas de présence de disques de grand diamètre.

2. Dispositif selon la revendication 1, caractérisé en ce que les moyens de guidage et/ou de maintien de l'ensemble des supports (27,28,29) sont constitués par une came (42) solidaire d'un organe (12) assurant le déplacement du plateau (2) vers le châssis (100) de l'appareil et coopérant avec un axe (40) monté sur l'un des supports (27), ladite came possédant au moins deux profils (44,45) sur lesquels l'axe (40) peut s'appuyer.

3. Dispositif selon la revendication 2, caractérisé en ce qu'un des profils (44) de la came (42) permet à l'axe (40) d'échapper à l'action de celle-ci lors d'un déplacement angulaire prédéterminé dans le cas de présence de disques de petit diamètre.

4. Dispositif selon la revendication 3, caractérisé en ce que l'autre profil (45) coopère avec l'axe (40) du support (27) lorsque celui-ci n'a pas subi un déplacement prédéterminé dans le cas de présence de disques de grand diamètre, pour dégager les tétons (23, 24, 25) de la périphérie d'un tel disque.

5. Dispositif selon les revendications 1 et 2, caractérisé en ce que le déplacement de la came (42) pouvant commander le mouvement des supports (27,28,29) y associés, a lieu avant le déplacement du plateau (2) proprement dit vers la position opérative.

6. Dispositif selon l'une quelconque des revendications 1 à 5, caractérisé en ce que le châssis (100) de l'appareil comporte un profil (37) coopérant avec l'un des supports (27) lorsque l'axe (40) de celui-ci a échappé à l'action de la came (42), afin d'assurer le déplacement coordonné de l'ensemble des supports (27,28,29) et des tétons (23,24,25) vers le centre du plateau (2) pour centrer le disque (3) qui s'y trouve dans le cas de présence de disques de petit diamètre.

7. Dispositif selon l'une quelconque des revendications précédentes, caractérisé en ce que le plateau (2) se présente sous la forme d'une dépression pour recevoir les disques (3), et comprend des moyens (120) assurant un pivotement vertical du disque autour d'une tangente à sa périphérie, cette périphérie s'appuyant sur le bord de la dépression.

8. Dispositif selon la revendication 1, caractérisé en ce que les moyens de guidage et/ou de maintien de l'ensemble des supports (27,28,29) sont constitués par un guide (206) solidaire du châssis (100) et muni de canaux (216, 218) avec lesquels coopère un axe (212) monté sur le support (27) effectuant le déplacement angulaire initial.

9. Dispositif selon la revendication 8, caractérisé en ce que le positionnement et le dimensionnement d'un premier canal (216) ramènent les supports (27,28,29) en position inopérative dans le cas de présence de disques de grand diamètre et en ce que le positionnement et le dimensionnement d'un deuxième canal (218) libère les supports (27,28,29) à l'action des moyens élastiques (32) et d'une butée (220) situés à l'extrémité du deuxième canal (218) pour entraîner l'axe (212) et l'ensemble des supports (27,28,29) dans un mouvement coordonné de centrage dans le cas de présence de disques de petit diamètre.

**Claims**

1. A device for the automatic centring of discs (3) of different diameters on the loading means (1) of a disc reproduction unit, this loading means comprising a movable tray (2) provided with a circular depression which ensures the centring of discs of the largest permissible diameter and ensuring, by its displacement, the movement of the disc from an inoperative position in which the disc can be set down or removed, to an operative position where the disc is positioned on its drive and reproduction means disposed within the chassis (100) of the unit, the centering device comprising at least three movable studs (23,24,25), each mounted on a support (27,28,29) and dedicated to interact with the periphery of the discs (3) by means which permit a coordinated movement of all the studs (23,24,25) to be obtained towards the centre of the tray (2), the device being characterised in that the coordinated movement of all the studs (23,24,25) and of the supports (27,28,29) is only activated after a predetermined angular displacement of only one of the supports (27) independently of the other supports (28,29), wherein this support (27), upon displacement of the mobile tray (2) towards the interior of the chassis (100) of the unit, cooperates with guiding and/or locking (42,206) means permitting said angular displacement if small diameter discs are present and preventing this if large diameter discs are present.

2. A device according to claim 1, characterised in that the guiding and/or locking means for all the supports (27,28,29) comprises a cam (42), rigidly connected to a member (12) which ensures the displacement of the tray (2) towards the chassis (100) of the unit, and which acts together with a pin (40) mounted on one of the supports (27), the said cam having at least two profiles (44,45) on which the pin (40) can rest.

3. A device according to claim 2, characterised in that one of the profiles (44) of the cam (42) allows the pin (40) to escape the action of the cam (42) upon a predetermined angular displacement if small diameter discs are present.

4. A device according to claim 3, characterised in that the other profile (45) acts together with the pin (40) of the support (27) when the latter has not undergone a predetermined displacement if large discs are present, in order to disengage the studs (23,24,25) from the periphery of such a disc.

5. A device according to claims 1 and 2, characterised in that the displacement of the cam (42) which can control the movement of the supports (27,28,29) associated therewith, takes place before the displacement of the tray (2) itself towards the operative position.

6. A device according to any one of claims 1 to 5, characterised in that the chassis (100) of the unit comprises a profile (37) which acts together with one of the supports (27) when the pin (40) of the latter escapes the action of the cam (42), in order to ensure the coordinated displacement of all the supports (27,28,29) and studs (23,24,25) towards the centre of the tray (2) to centre the disc (3) which is located there if small diameter discs are present.

7. A device according to any one of the preceding claims, characterised in that the tray (2) is present in the form of a depression for receiving the discs (3) and comprises means (120) for ensuring a vertical pivoting of the disc about a tangent to its periphery, which periphery rests on the edge of the depression.

8. A device according to claim 1, characterised in that the guiding and/or locking means for all the supports (27,28,29) comprises a guide (206) rigidly connected to the chassis (100) and provided with channels (216,218) cooperating with a pin (212) mounted on the support (27) carrying out the initial angular displacement.

9. A device according to claim 8, characterised in that the positioning and dimensioning of a first channel (216) return the supports (27,28,29) to the inoperative position if large diameter discs are present, and that the positioning and dimensioning of a second channel (218) release the supports (27,28,29) to the action of the elastic means (32) and an abutment (220) located at the end of the second channel (218) in order to displace the pin (212) and all the supports (27,28,29) in a coordinated centring movement if small diameter discs are present.

**Patentansprüche**

1. Vorrichtung zur automatischen Zentrierung von Platten (3) unterschiedlichen Durchmesser auf einer Ladeeinrichtung (1) einer Plattenabtastvorrichtung, die Ladeeinrichtung eine Schieblade (2) aufweist, die eine kreisförmige Vertiefung hat, die eine Zentrierung der Platten mit dem grössten Durchmesser gewährleistet und mittels ihrer Verschiebung den Durchtritt der Platte von einer Ruhestellung, in der die Platte abgelegt und/oder entnommen werden kann, gegen eine Arbeitsstellung gewährleistet, in der die Platte auf ihren Antriebs- und Abtasteinrichtungen positioniert ist, die im Inneren des Rahmens (100) des Gerätes angeordnet sind, die Zentriereinrichtung mindestens drei bewegliche Stifte (23, 24, 25) umfasst, von denen jeder auf einer Halterung (27, 28, 29) montiert ist, die dazu dienen, mit dem Umfang der Platten (3) mittels einer Einrichtung zusammenzuarbeiten, die es ermöglicht, eine koordinierte Bewegung der Gesamtheit der Stifte (23, 24, 25) gegen die Mitte der Schieblade (2) zu erhalten, und die Vorrichtung dadurch **gekennzeichnet** ist, dass

die koordinierte Bewegung der Gesamtheit der Stifte (23, 24, 25) und der Halterungen (27, 28, 29) allein nach einer vorgegebenen Winkelverschiebung einer einzigen der Halterungen (27), unabhängig von den anderen Halterungen (28, 29) bewirkt wird, diese Halterung (27) während der Verschiebung der **Schieblade** (2) gegen das Innere des Rahmens (100) des Gerätes mit einer Führungseinrichtung und/oder Halteeinrichtung (42, 206) zusammenwirkt, die genannte Winkelverschiebung im Falle des Vorliegens von Platten kleinen Durchmessers gestattet und im Falle des Vorliegens von Platten grossen Durchmessers verhindert.

2. Vorrichtung nach Anspruch 1, dadurch **gekennzeichnet,** dass die Führungseinrichtung und/oder Halteeinrichtung der Gesamtheit der Halterungen (27, 28, 29) aus einer Kurvenfläche (42) besteht, die fest mit einem Element (12) verbunden ist, das die Verschiebung der Schieblade (2) gegen den Rahmen (100) des Gerätes hin gewährleistet und die mit einer Achse (40) zusammenwirkt, die auf einer der Halterungen (27) befestigt ist, und die Kurvenfläche mindestens zwei Flankenformen (44, 45) besitzt, auf welche sich die Achse (40) abstützen kann.

3. Vorrichtung nach Anspruch 2, dadurch **gekennzeichnet,** dass eine der Flankenformen (44) der Kurvenfläche (42) es der Achse (40) gestattet, sich während einer vorgegebenen Winkelverschiebung im Falle des Vorliegens von Platten kleinen Durchmessers, der Kurvenfläche zu entziehen.

4. Vorrichtung nach Anspruch 3, dadurch **gekennzeichnet,** dass die andere Flankenform (45) mit der Achse (40) der Halterung (27) zusammenwirkt, während diese keine vorgegebene Verschiebung im Falle des Vorliegens von Platten grossen Duchmessers erfahren hat, um die Stifte (23, 24, 25) vom Umfang einer derartigen Platte zu lösen.

5. Vorrichtung nach den Ansprüchen 1 und 2, dadurch **gekennzeichnet,** dass die Verschiebung der Kurvenfläche (42), die die Bewegung der dort zugeordneten Halterungen (27, 28, 29) steuern kann, stattfindet vor der eigentlichen Verschiebung der Schieblade (2) gegen die Arbeitsstellung hin.

6. Vorrichtung nach irgendeinem der Ansprüche 1 bis 5, dadurch **gekennzeichnet,** dass der Rahmen (100) des Gerätes ein Profil (37) aufweist, das mit einer der Halterungen (27) zusammenwirkt, während die Achse (40) der Halterung sich der Einwirkung der Kurvenfläche (42) entzogen hat, um die koordinierte Verschiebung der Gesamtheit der Halterungen (27, 28, 29) und der Stifte (23, 24, 25) gegen den Mittelpunkt der Schieblade (2) zu gewährleisten, um die dort befindliche Platte (3) im Falle des Vorliegens von Platten kleinen Durchmessers zu zentrieren.

7. Vorrichtung nach irgendeinem der vorausgehenden Ansprüche, dadurch **gekennzeichnet,** dass die Schieblade (2) mit einer Vertiefung zur Aufnahme der Platten (3) ausgestattet ist und eine Einrichtung (120) umfasst, die eine vertikale Schwenkbewegung der Platte um eine Tangente zu ihrem Umfang zu gewährleisten, und dieser Umfang sich auf den Rand der Vertiefung stützt.

8. Vorrichtung nach Anspruch 1, dadurch **gekennzeichnet,** dass die Führungseinrichtung und/oder Halteeinrichtung der Gesamtheit der Halterungen (27, 28, 29) durch eine mit dem Rahmen (100) fest verbundene Führung (206) gebildet wird, die Kanäle (216, 218) aufeist, mit denen eine auf der Halterung (27) befestigte Achse (212) zusammenarbeitet, die die einleitende Winkelverschiebung bewirkt.

9. Vorrichtung nach Anspruch 8, dadurch **gekennzeichnet,** dass die Positionierung und Dimensionierung eines ersten Kanals (216) die Halterungen (27, 28, 29) im Fall des Vorliegens von Platten grossen Durchmessers in eine Ruhestellung bringen und dass die Positionierung und die Abmessung eines zweiten Kanals (218) die Halterungen (27, 28, 29) der Einwirkung einer Federanordnung (32) und eines am Ende des zweiten Kanals (218) angeordneten Anschlags (220) freigibt, um die Achse (212) und die Gesamtheit der Halterungen (27, 28, 29) in einer koordinierten Zentrierungsbewegung in dem Fall anzutreiben, bei dem Platten kleinen Durchmessers vorliegen.

EP 0 286 770 B1

FIG. 1

10

FIG. 2

FIG. 3

FIG. 4

FIG. 5

FIG. 6

FIG. 7

FIG. 8

FIG. 9

FIG. 10

FIG. 11

FIG. 12